# EUROPEAN PATENT APPLICATION

(11) **EP 1 710 513 A1**
(43) Date of publication of application: **11.10.2006**
(21) Application number: 04705933.2
(22) Date of filing: 28.01.2004
(51) Int. Cl.: F24F 1/00

(54) **AIR CONDITIONER**

(71) Applicant: MITSUBISHI DENKI KABUSHIKI KAISHA, Chiyoda-ku, Tokyo 100-8310 (JP)
(72) Inventor: MOCHIZUKI, Shigenobu; c/o MITSUBISHI ELECTRIC, 1-chome, Chiyoda-ku, Tokyo; 1020073 (JP); KATAYAMA, Kazuyuki; c/o MITSUBISHI ELECTRIC, 1-chome, Ch iyoda-ku, Tokyo; 1020073 (JP); KAZAMA, Kazuhiro; c/o MITSUBISHI ELECTRIC, 1-chome, Chiyoda-ku, Tokyo; 1020073 (JP); YAMADA, Hiroyasu; c/o MITSUBISHI ELECTRIC, 1-chome, Chiyoda-ku, Tokyo; 1020073 (JP)
(74) Representative: Sajda, Wolf E.
(86) International application number: PCT/JP2004/000730
(87) International publication number: WO 2005/073636

(57) **Abstract**

An air conditioner including a fan motor (2) connected to a commercial power source (1), a motor drive unit (5) inserted between the commercial power source (1) and the fan motor (2) and for supplying power to the fan motor (2) based on an input signal from a central control unit (3), and an open/close detection unit (6) for detecting opening/closing of an air outlet of an air conditioner body. The open/close detection unit (6) interrupts the power supply to the fan motor (2) through the motor drive unit (5) as soon as the opening of the air outlet is detected.

## Description

### Technical Field

The present invention relates to control of a fan motor of an air conditioner, and particularly relates to an air conditioner in which driving of a fan motor is stopped when an air outlet provided in an air conditioner body is opened.

### Background Art

In a conventional air conditioner, for example, as shown in Fig. 15 (JP-A-2002-71194), a control signal is sent from a central control unit 3 of the air conditioner to a motor drive unit 5 so as to change a current applied to a fan motor 2 and thereby control the rotation thereof. In addition, a mechanism (not shown) for opening/closing an air outlet (not shown) is arranged so that a user can clean the inside of the air conditioner, while louvers are located in the air outlet in normal use so as to form a protective mechanism for preventing the user from putting his/her hand into the air outlet.

Cleaning is performed after the louvers serving as the protective mechanism are removed. To this end, by use of a signal from an open/close detection unit 6 constituted by the louvers and the air outlet portion, the central control unit 3 makes a judgment by software on whether the air outlet has been opened. When the open state is detected from the signal from the open/close detection unit 6, the central control unit 3 of the air conditioner sends a signal to the motor drive unit 5 so as to stop the current applied to the fan motor 2.

In the aforementioned conventional air conditioner, control to detect the open state of the protective mechanism and stop the fan motor 2, which is performed when the user removes the louvers as the protective mechanism and opens the air outlet in order to clean the inside of the air conditioner, depends on the software of the central control unit 3. Therefore, there is a problem that in the case when the software misjudges the open state as a closed state, the fan motor 2 is rotating though the user has opened the air outlet.

In addition, control to stop the fan motor 2 in the case when the user removes the louvers as the protective mechanism and opens the air outlet in order to clean the inside of the air conditioner depends on a signal given from the central control unit 3. Therefore, there is a problem that in the case when the central control unit 3 fails, the fan motor 2 is rotating though the user has opened the air outlet.

In addition, control to stop the fan motor 2 in the case when the user removes the louvers as the protective mechanism and opens the air outlet in order to clean the inside of the air conditioner depends on the motor drive unit 5 to stop the fan motor 2. Therefore, there is a problem that in the case when the motor drive unit 5 fails, the fan motor is rotating though the user has opened the air outlet.

The present invention was developed to solve the foregoing problems. It is a first object of the present invention to obtain a highly reliable air conditioner in which the rotation of a fan motor can be stopped surely as soon as a user opens an air outlet of the air conditioner.

In addition, it is a second object to obtain an air conditioner in which the rotation of a fan motor can be stopped independently of software of a central control unit of the air conditioner as soon as a user opens an air outlet.

In addition, it is a third object to obtain an air conditioner in which a unit for controlling the rotation of a fan motor and a unit for stopping the fan motor at the same time when an air outlet is opened are arranged independently of each other in order to enhance the reliability in stop operation.

In addition, it is a fourth object to obtain an air conditioner in which the lives of a central control unit for controlling the rotation of a fan motor and a unit for stopping the fan motor can be elongated individually.

### Disclosure of the Invention

An air conditioner according to the present invention includes a fan motor connected to a power supply, a motor drive unit inserted between the power supply and the fan motor and for supplying power to the fan motor based on an input signal, and an open/close detection unit for detecting opening/closing of an air outlet of an air conditioner body, and the open/close detection unit controls power supply to the fan motor through the motor drive unit when opening of the air outlet is detected.

In addition, the open/close detection unit interrupts power supply to the fan motor through the motor drive unit when opening of the air outlet is detected.

In addition, there is provided a power supply on/off unit for supplying power to the fan motor, and the open/close detection unit interrupts power supply to the fan motor through the power supply on/off unit when opening of the air outlet is detected.

In addition, there is provided signal transmitting means, which output a signal indicating opening of the air outlet when opening of the air outlet is detected by the open/close detection unit, display means, and control means, which interrupt power supply to the fan motor through the motor drive unit and display stopping of the fan motor through the display means when the signal is inputted from the signal transmitting means.

In addition, an electromagnetic switch is used in the power supply on/off unit.

In addition, a semiconductor device is used in the power supply on/off unit.

### Brief Description of the Drawings

- Fig. 1: is a block diagram showing the schematic configuration of an air conditioner according to Embodiment 1 of the present invention;
- Fig. 2: is a circuit diagram showing the configuration of a fan motor control unit in the air conditioner according to Embodiment 1;
- Fig. 3: is a circuit diagram showing a first modification of the fan motor control unit in the air conditioner according to Embodiment 1;
- Fig. 4: is a circuit diagram showing a second modification of the fan motor control unit in the air conditioner according to Embodiment 1;
- Fig. 5: is a block diagram showing the schematic configuration of an air conditioner according to Embodiment 2 of the present invention;
- Fig. 6: is a circuit diagram showing the configuration of a fan motor control unit in the air conditioner according to Embodiment 2;
- Fig. 7: is a circuit diagram showing a first modification of the fan motor control unit in the air conditioner according to Embodiment 2;
- Fig. 8: is a circuit diagram showing a second modification of the fan motor control unit in the air conditioner according to Embodiment 2;
- Fig. 9: is a circuit diagram showing the configuration of a fan motor control unit in an air conditioner according to Embodiment 3;
- Fig. 10: is a circuit diagram showing a first modification of the fan motor control unit in the air conditioner according to Embodiment 3;
- Fig. 11: is a circuit diagram showing a second modification of the fan motor control unit in the air conditioner according to Embodiment 3;
- Fig. 12: is a block diagram showing the schematic configuration of an air conditioner according to Embodiment 4 of the present invention;
- Fig. 13: is a circuit diagram showing a first modification of a fan motor control unit in the air conditioner according to Embodiment 4;
- Fig. 14: is a circuit diagram showing a second modification of the fan motor control unit in the air conditioner according to Embodiment 4; and

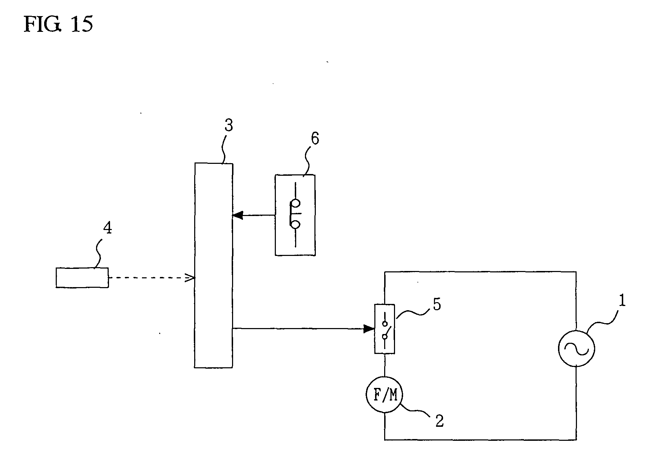

- Fig. 15: is a block diagram showing the schematic configuration of a conventional air conditioner.

### Best Mode for Carrying out the Invention

### Embodiment 1

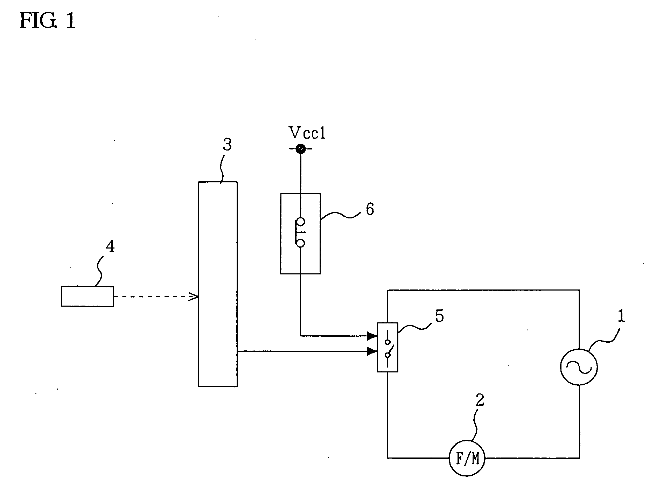

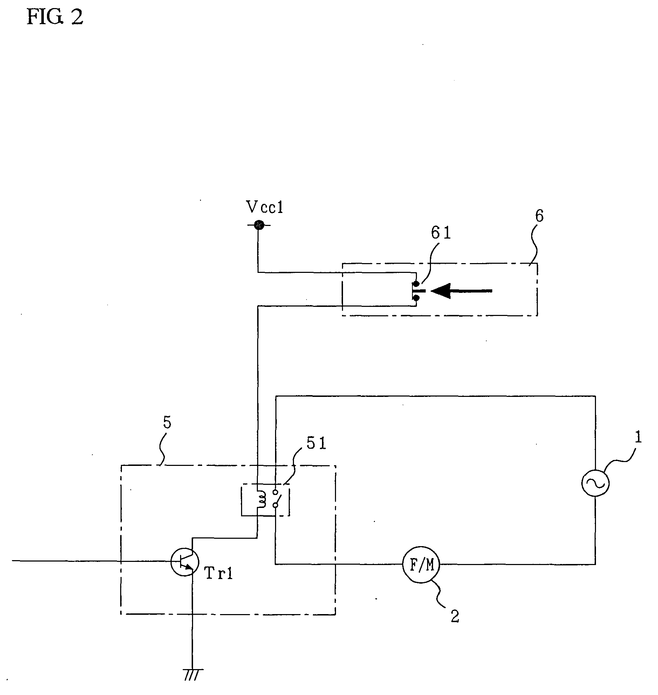

Embodiment 1 of the present invention will be described below with reference to Figs. 1 and 2.

In the drawings, a fan motor 2 is connected to a commercial power source 1 through a motor drive unit 5. As shown in Fig. 2, the motor drive unit 5 includes a transistor Tr1 turned on/off in accordance with a signal from a central control unit 3, and an electromagnetic switch 51 having a contact portion closed at the time when the transistor Tr1 is turned on, to supply the commercial power source 1 to the fan motor 2. An open/close detection unit 6 has a normally closed switch 61 turned off at the time when an air outlet (not shown) provided in an air conditioner body is opened.

For example, this switch 61 is constituted by a microswitch, having one end connected to a control source Vcc1 and the other end connected to the collector side of the transistor Tr1 through a coil of the electromagnetic switch 51 of the motor drive unit 5. The aforementioned central control unit 3 executes a control program in accordance with a setting signal (infrared signal) from a remote controller 4 so as to make control required for heating operation or cooling operation.

Next, description will be made on the operation of Embodiment 1.
When a setting signal is transmitted from the remote controller 4, the setting signal is received by a receiving portion (not shown) provided in the air conditioner body, and transmitted to the central control unit 3. When the content of the setting signal is a command to start operation, an operation signal is supplied from the central control unit 3 to the motor drive unit 5. In this event, the motor drive unit 5 turns on the transistor Tr1 so as to supply the control source Vcc1 to the coil of the electromagnetic switch 51 and close the contact portion thereof.

Thus, the commercial power source 1 is supplied to the fan motor 2 so as to drive it. When the air outlet of the air conditioner body is opened in this state, the switch 61 of the open/close detection unit 6 is sequentially turned off, so as to interrupt the control source Vcc1 supplied to the electromagnetic switch 51 of the motor drive unit 5. In this event, the contact portion of the electromagnetic switch 51 opens to interrupt the commercial power source 1 to the fan motor 2. Thus, the driving of the fan motor 2 is stopped.

In such a manner, according to Embodiment 1, as soon as the switch 61 of the open/close detection unit 6 is turned off due to the opening of the air outlet, the electromagnetic switch 51 provided in the motor drive unit 5 is turned off without intermediation of the central control unit 3, so that the commercial power source 1 supplied to the fan motor 2 is interrupted. Accordingly, failure or misjudgment of the central control unit 3 does not cause the fan motor 2 to be prevented from stopping when the air outlet is opened. Thus, the safety is improved.

Incidentally, in the aforementioned Embodiment 1, description has been made only on the case where the fan motor 2 is stopped when the air outlet is opened. However, Embodiment 1 may be also applied to the motor drive unit 5 for changing the rotational speed of the fan motor 2.

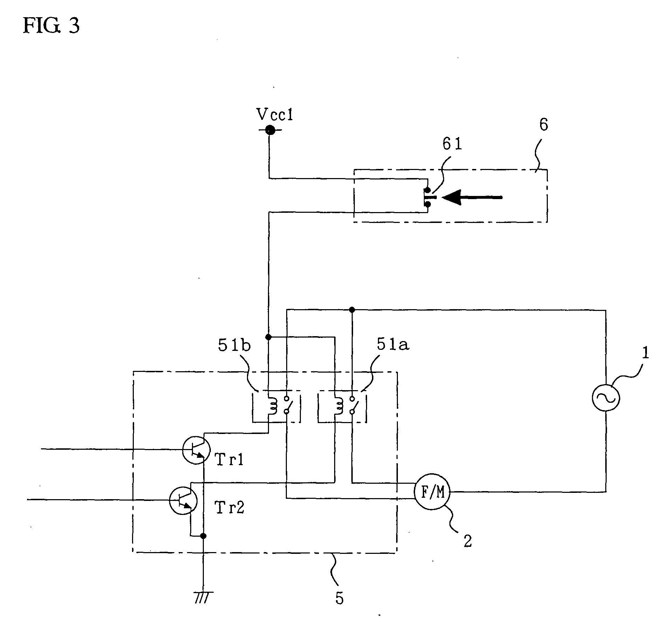

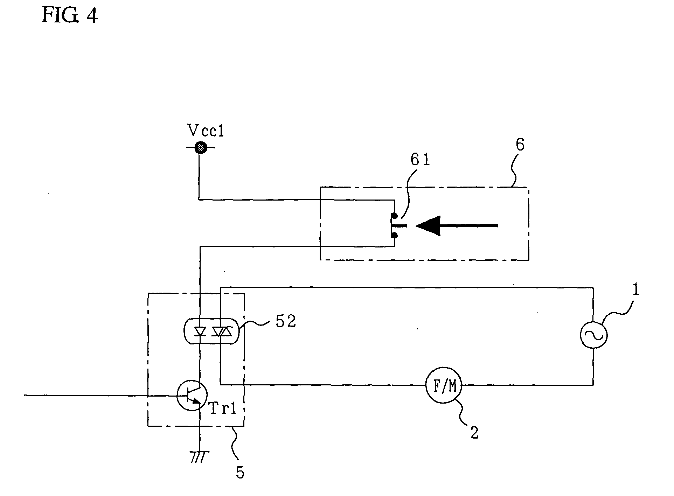

For example, as shown in Fig. 3, a plurality of electromagnetic switches 51a and 51b and a plurality of transistors Tr1 and Tr2 may be provided in the motor drive unit 5 so as to change over a winding of the fan motor 2 to which a current should be applied. Alternatively, as shown in Fig. 4, a photocoupler 52 constituted by a light emitting diode and a phototriac is used in the motor drive unit 5 so as to change the phase angle of a current applied to one winding of the fan motor 2.

Even in either system, as soon as the air outlet is opened, the motor drive unit 5 side is turned off without intermediation of the central control unit 3 as described previously, so that the commercial power source 1 supplied to the fan motor 2 is interrupted. Accordingly, failure or misjudgment of the central control unit 3 does not cause the fan motor 2 to be prevented from stopping. Thus, it is possible to obtain an effect that the safety is improved in the same manner as described previously.

In addition, although an example in which a commercial power source (AC) is used for driving the fan motor 2 has been described in Embodiment 1, it is also applicable to apparatus in which the fan motor 2 is driven by a commutated power supply.

### Embodiment 2

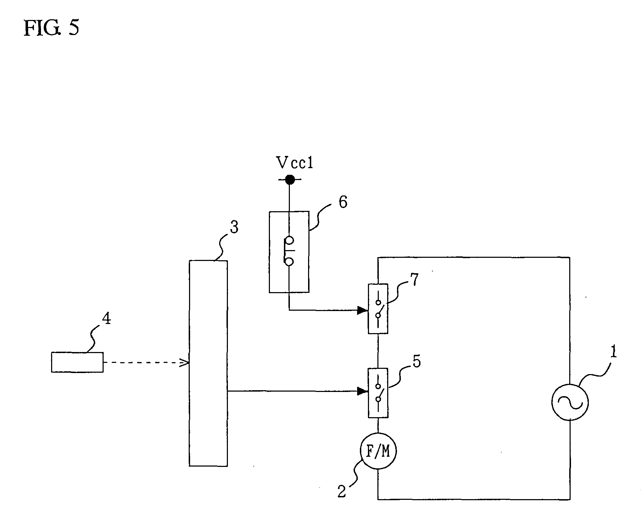

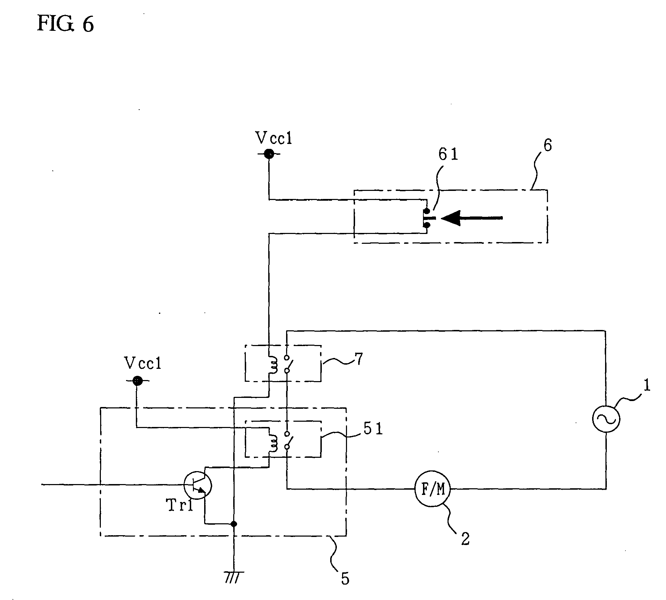

Embodiment 2 of the present invention will be described with reference to Figs. 5 and 6. Incidentally, parts the same as or equivalent to those in Embodiment 1 described with reference to Figs. 1 and 2 are denoted by the same reference numerals correspondingly and description thereof will be omitted.

In Embodiment 2, as shown in Fig. 5, not only a motor drive unit 5 but also a power supply on/off unit 7 are inserted between a fan motor 2 and a commercial power source 1. This power supply on/off unit 7 is constituted by an electromagnetic switch, for example, as shown in Fig. 6. One end of a coil of the power supply on/off unit 7 is connected to a switch 61 of an open/close detection unit 6, while the other end of the coil is connected to the signal ground side.

In addition, one end of a contact portion of the power supply on/off unit 7 is connected to the commercial power source 1, while the other end of the contact portion is connected to a contact portion of an electromagnetic switch 51 of the motor drive unit 5. When the switch 61 of the open/close detection unit 6 is on, that is, when an air outlet of an air conditioner body is closed, a control source Vcc1 is supplied to the power supply on/off unit 7 so that the contact portion thereof is turned on.

In the motor drive unit 5, a coil of the electromagnetic switch 51 is inserted between the control source Vcc1 and a transistor Tr1, and the contact portion of the electromagnetic switch 51 is inserted between the contact portion of the power supply on/off unit 7 and the fan motor 2.

Next, description will be made on the operation of Embodiment 2.
When the transistor Tr1 of the motor drive unit 5 is turned on due to an operation signal inputted from the central control unit 3, the electromagnetic switch 51 is turned on so as to supply the commercial power source 1 to the fan motor 2. When the air outlet is opened during the driving of the fan motor 2, the switch 61 of the open/close detection unit 6 is sequentially turned off, so as to interrupt the control source Vcc1 supplied to the power supply on/off unit 7. In this event, the contact portion of the power supply on/off unit 7 is turned off to interrupt the commercial power source 1. Thus, the driving of the fan motor 2 is stopped.

In such a manner, according to Embodiment 2, the electromagnetic switch 51 of the motor drive unit 5 and the power supply on/off unit 7 are designed to operate independently of each other. Thus, the power supply on/off unit 7 does not have to operate in order to run and stop the air conditioner body due to the operation of the remote controller 4. It is therefore possible to elongate the life of the power supply on/off unit 7 and thereby enhance the reliability. In addition, even if there occurs a short-circuit failure in the contact portion of the electromagnetic switch 51 of the motor drive unit 5, the fan motor 2 can be stopped surely by the opening of the air outlet.

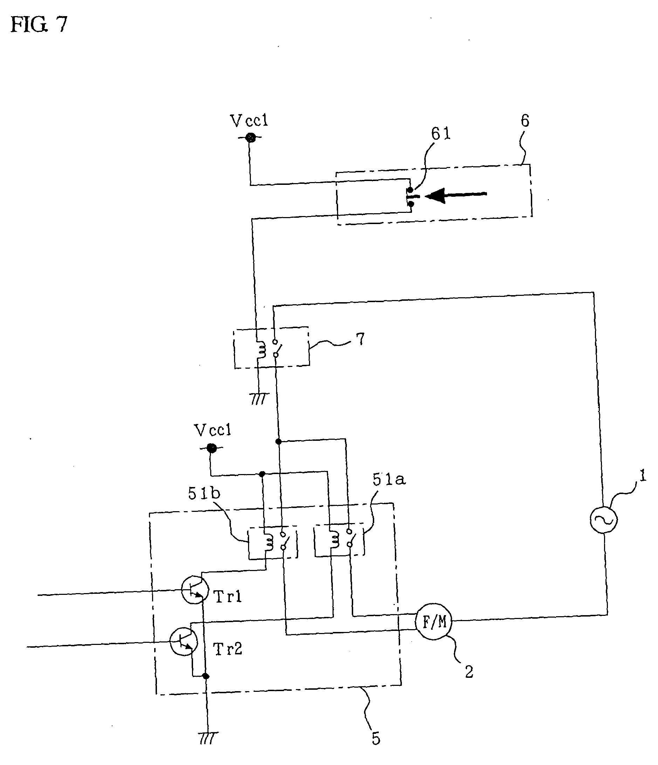

Incidentally, in the aforementioned Embodiment 2, description has been made only on the case where the fan motor 2 is stopped when the air outlet is opened. However, Embodiment 2 may be also applied to the motor drive unit 5 for changing the rotational speed of the fan motor 2. For example, as shown in Fig. 7, a plurality of electromagnetic switches 51a and 51 b and a plurality of transistors Tr1 and Tr2 may be provided in the motor drive unit 5 so as to change over a winding of the fan motor 2 to which a current should be applied.

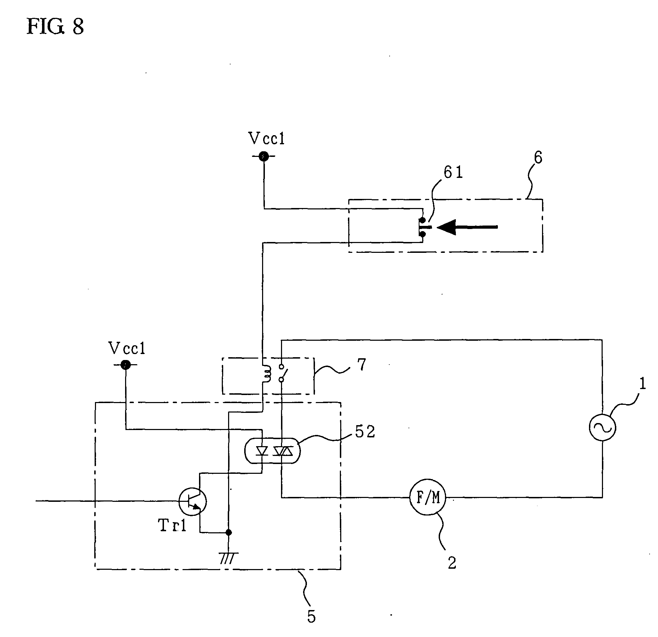

Alternatively, as shown in Fig. 8, a photocoupler 52 constituted by a light emitting diode and a phototriac is used in the motor drive unit 5 so as to change the phase angle of a current applied to one winding of the fan motor 2. Even in either system, as soon as the air inlet is opened, the motor drive unit 5 side is turned off without intermediation of the central control unit 3 as described previously, so that the commercial power source 1 supplied to the fan motor 2 is interrupted. Accordingly, failure or misjudgment of the central control unit 3 does not cause the fan motor 2 to be prevented from stopping. Thus, it is possible to obtain an effect that the safety is improved in the same manner as described previously.

In addition, although an example in which a commercial power source (AC) is used for driving the fan motor 2 has been described in Embodiment 2, it is also applicable to apparatus in which the fan motor 2 is driven by a commutated power supply.

### Embodiment 3

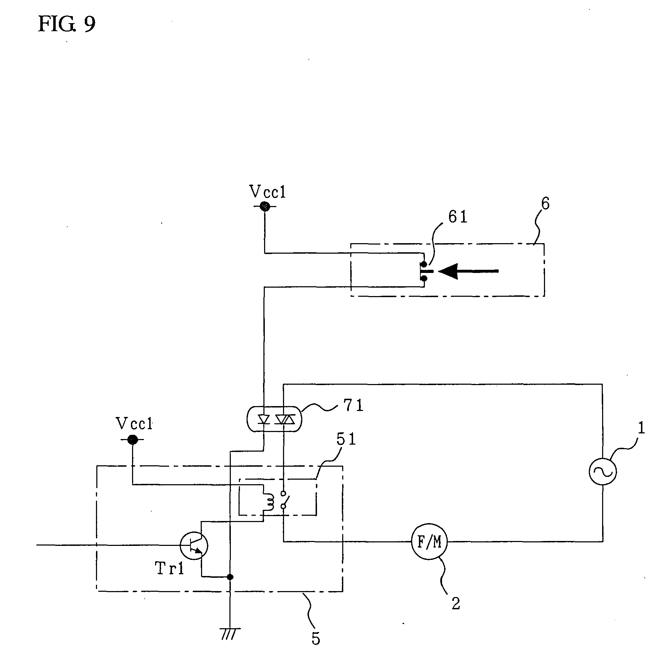

Embodiment 3 of the present invention will be described with reference to Fig. 9. Incidentally, parts the same as or equivalent to those in Embodiment 2 described with reference to Fig. 6 are denoted by the same reference numerals correspondingly and description thereof will be omitted.

In the aforementioned Embodiment 2, an electromagnetic switch was used as the power supply on/off unit 7. However, in Embodiment 3, for example, a photocoupler 71 constituted by a light emitting diode and a phototriac is used instead of the electromagnetic switch. An anode of the light emitting diode is connected to a switch 61 of an open/close detection unit 6, while a cathode thereof is connected to the signal ground side.

In addition, one end of the phototriac is connected to a commercial power source 1, while the other end is connected to a contact portion of an electromagnetic switch 51 of a motor drive unit 5. When the switch 61 of the open/close detection unit 6 is on, the light emitting diode of the photocoupler 71 emits light so as to turn on the phototriac.

Next, description will be made on the operation of Embodiment 3.
As described in Embodiment 2, when the transistor Tr1 of the motor drive unit 5 is turned on, the contact portion of the electromagnetic switch 51 of the motor drive unit 5 is turned on so as to supply the commercial power source 1 to the fan motor 2. When the air outlet of the air conditioner body is opened during the driving of the fan motor 2, the switch 61 of the open/close detection unit 6 is sequentially turned off, so as to interrupt the control source Vcc1 supplied to the photocoupler 71. In this event, the phototriac of the photocoupler 71 is turned off to interrupt the commercial power source 1. Thus, the driving of the fan motor 2 is stopped.

In such a manner, according to Embodiment 3, the photocoupler 71 of a semiconductor device is used as the power supply on/off unit operating independently of the motor drive unit 5. Thus, the reliability in life is further enhanced in comparison with that in Embodiment 2 using an electromagnetic switch in the power supply on/off unit 7. In addition, there is an effect that miniaturization and power saving can be achieved in comparison with the electromagnetic switch of the power supply on/off unit 7.

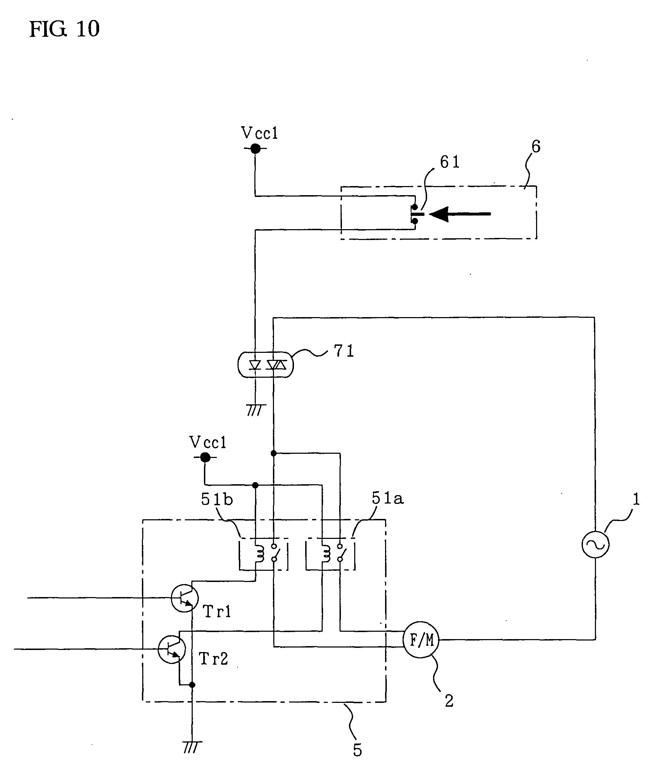

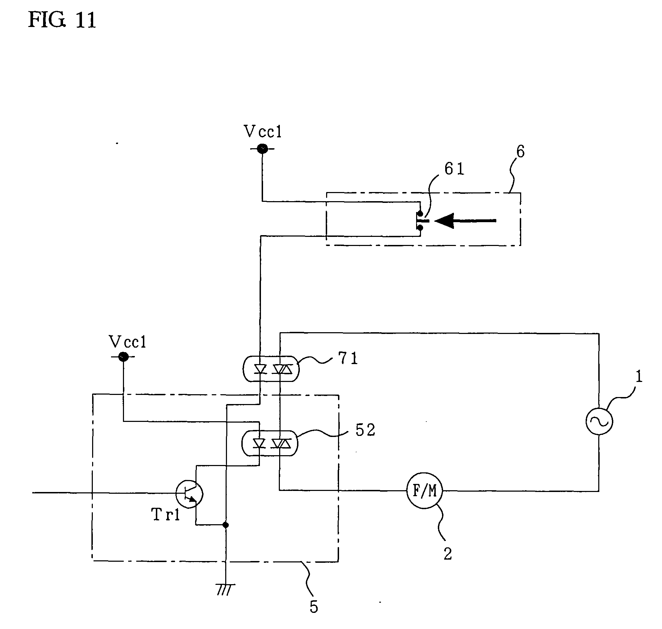

Incidentally, in the aforementioned Embodiment 3, description has been made only on the case where the fan motor 2 is stopped when the air outlet is opened. However, Embodiment 3 may be also applied to the motor drive unit 5 for changing the rotational speed of the fan motor 2. For example, as shown in Fig. 10, a plurality of electromagnetic switches 51a and 5 1 b and a plurality of transistors Tr1 and Tr2 may be provided in the motor drive unit 5 so as to change over a winding of the fan motor 2 to which a current should be applied. Alternatively, as shown in Fig. 11, a photocoupler 52 constituted by a light emitting diode and a phototriac is used in the motor drive unit 5 so as to change the phase angle of a current applied to one winding of the fan motor 2.

Even in either system, as soon as the air outlet is opened, the motor drive unit 5 side is turned off without intermediation of the central control unit 3 as described previously, so that the commercial power source 1 supplied to the fan motor 2 is interrupted. Accordingly, failure or misjudgment of the central control unit 3 does not cause the fan motor 2 to be prevented from stopping. Thus, it is possible to obtain an effect that the safety is improved in the same manner as described previously.

In addition, although an example in which a commercial power source (AC) is used for driving the fan motor 2 has been described in Embodiment 3, it is also applicable to apparatus in which the fan motor 2 is driven by a commutated power supply.

### Embodiment 4

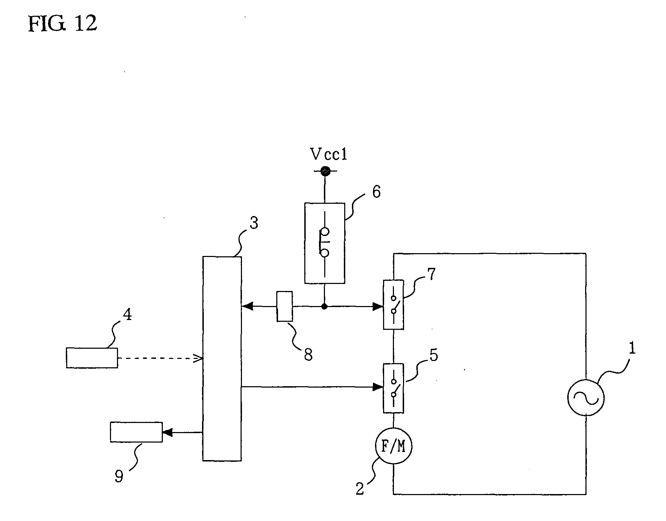

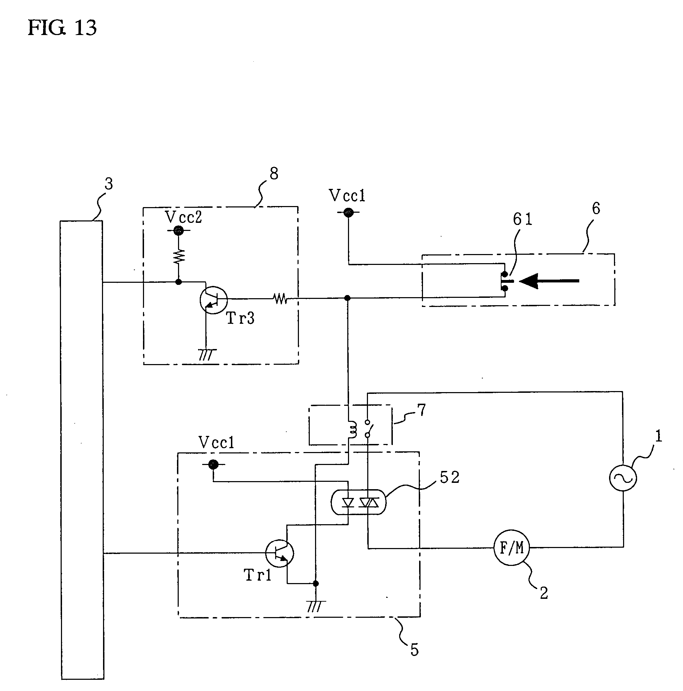

Embodiment 4 of the present invention will be described with reference to Figs. 12 and 13. Incidentally, parts the same as or equivalent to those in Fig. 8 described as a modification of Embodiment 2 are denoted by the same reference numerals correspondingly and description thereof will be omitted.

In the aforementioned Embodiments 1, 2 and 3, the signal of the open/close detection unit 6 was prevented from being transmitted to the central control unit 3. However, in Embodiment 4, as shown in Fig. 12, the signal of the open/close detection unit 6 is designed to be transmitted to the central control unit 3 through a signal transmitting circuit 8 (signal transmitting means). As shown in Fig. 13, this signal transmitting circuit 8 has a transistor Tr3, the collector of which is connected to the control source Vcc2 side and also connected to the central control unit 3.

The base of the transistor Tr3 is connected to a coil of an electromagnetic switch of a power supply on/off unit 7 and also connected to a switch 61 of an open/close detection unit 6, while the emitter of the transistor Tr3 is connected to the signal ground side. This signal transmitting circuit 8 outputs a low-level signal to the central control unit 3 when the switch 61 of the open/close detection unit 6 is on. When the switch 61 is turned off, the signal transmitting circuit 8 reverses the low-level signal into a high-level signal.

The central control unit 3 includes a display portion 9 (display means) for informing a user of the state of the air outlet. For example, the display portion 9 is a light emitting diode. When the signal from the signal transmitting circuit 8 is in a low level, the central control unit 3 concludes that the air outlet is closed, and puts the light emitting diode of the display portion 9 off by way of example.

When the signal is reversed into a high level, the central control unit 3 concludes that the air outlet is opened, and blinks the light emitting diode by way of example, while the central control unit 3 supplies the motor drive unit 5 with a stop signal for stopping the driving of the fan motor 2. This control is based on a control program.

Next, description will be made on the operation of Embodiment 4.
Assume that the air outlet of the air conditioner body is opened when the motor drive unit 5 is driving the fan motor 2 in accordance with an operation signal from the central control unit 3. In connection with the opening of the air outlet, the switch 61 of the open/close detection unit 6 is turned off to interrupt the control source Vcc1 supplied to the power supply on/off unit 7 and the signal transmitting circuit 8. In this event, the contact portion of the electromagnetic switch of the power supply on/off unit 7 is turned off to interrupt the commercial power source 1.

Thus, the driving of the fan motor 2 is stopped. The signal transmitting circuit 8 reverses its output signal from a low level to a high level. On the other hand, upon detection of the high-level signal, the central control unit 3 concludes that the air outlet is opened, and blinks the light emitting diode of the display portion 9 while supplying the motor drive unit 5 with a stop signal for stopping the driving of the fan motor 2. Thus, the transistor Tr1 in the motor drive unit 5 is turned off so that the photocoupler 71 is turned off.

In such a manner, according to Embodiment 4, as soon as the air outlet is opened, the signal transmitting circuit 8 informs the central control unit 3 of information indicating that fact, and turns off a photocoupler 52 of the motor drive unit 5, while the electromagnetic switch of the power supply on/off unit 7 is turned off. Thus, even if there occurs a short-circuit failure in either the photocoupler 52 or the electromagnetic switch of the power supply on/off unit 7, the fan motor 2 can be stopped surely. In addition, through the display portion 9, the user can be also informed of the open state of the air outlet and the stop of the fan motor 2.

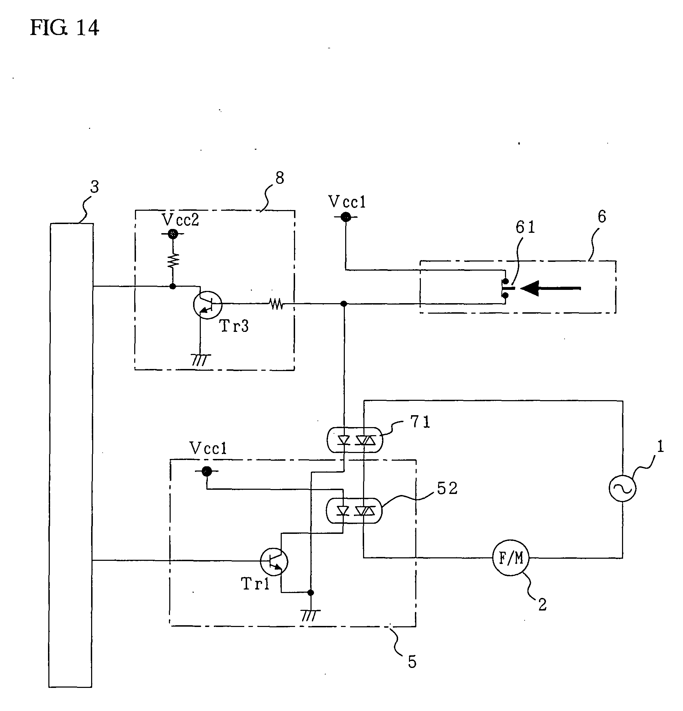

Incidentally, in the aforementioned Embodiment 4, description has been made on the case where an electromagnetic switch is used in the power supply on/off unit 7. However, for example, as shown in Fig. 14, similar effect can be obtained even if a photocoupler 71 is used instead of the electromagnetic switch. In addition, description has been made only on the case where the fan motor 2 is stopped when the air outlet is opened. However, Embodiment 4 may be also applied to the motor drive unit 5 for changing the rotational speed of the fan motor 2 in the same manner as in Embodiments 1, 2 and 3.

In addition, although an example in which a commercial power source (AC) is used for driving the fan motor 2 has been described in Embodiment 4, it is also applicable to apparatus in which the fan motor 2 is driven by a commutated power supply.

### Description of Reference Numerals

- 1: = commercial power source,
- 2: = fan motor
- 3: = central control unit
- 4: = remote controller
- 5: = motor drive unit
- 51: = electromagnetic switch
- 51 a: = electromagnetic switch
- 51 b: = electromagnetic switch
- 52: = photocoupler
- 6: = open/close detection unit
- 61: = switch
- 7: = electromagnetic switch of power supply on/off unit
- 71: = photocoupler
- 8: = signal transmitting circuit and
- 9: = display portion.

## Claims

1. An air conditioner **characterized by** comprising a fan motor connected to a power supply, a motor drive unit inserted between said power supply and said fan motor and for supplying power to said fan motor based on an input signal, and an open/close detection unit for detecting opening/closing of an air outlet of an air conditioner body, wherein said open/close detection unit controls power supply to said fan motor through said motor drive unit when opening of said air outlet is detected.

2. An air conditioner according to Claim 1, **characterized in that** said open/close detection unit interrupts power supply to said fan motor through said motor drive unit when opening of said air outlet is detected.

3. An air conditioner according to Claim 1 or 2, **characterized by** further comprising a power supply on/off unit for supplying power to said fan motor, wherein said open/close detection unit interrupts power supply to said fan motor through said power supply on/off unit when opening of said air outlet is detected.

4. An air conditioner according to Claim 3, **characterized by** further comprising signal transmitting means, which output a signal indicating opening of said air outlet when opening of said air outlet is detected by said open/close detection unit, display means, and control means, which interrupt power supply to said fan motor through said motor drive unit and display stopping of said fan motor through said display means when said signal is inputted from said signal transmitting means.

5. An air conditioner according to Claim 3 or 4, **characterized in that** an electromagnetic switch is used in said power supply on/off unit.

6. An air conditioner according to Claim 3 or 4, **characterized in that** a semiconductor device is used in said power supply on/off unit.
